(19) Europäisches Patentamt European Patent Office Office européen des brevets

(11) **EP 4 685 531 A1**

(12) **EUROPEAN PATENT APPLICATION**

(43) Date of publication:
28.01.2026 Bulletin 2026/05

(21) Application number: 25190113.8

(22) Date of filing: **17.07.2025**

(51) International Patent Classification (IPC):
*G02B 6/02* (2006.01)     *G02B 6/032* (2006.01)
*G02B 6/24* (2006.01)     *G02B 6/25* (2006.01)
*G02B 6/26* (2006.01)     *G02B 6/38* (2006.01)

(52) Cooperative Patent Classification (CPC):
G02B 6/02328; G02B 6/02304; G02B 6/032;
G02B 6/241; G02B 6/25; G02B 6/262;
G02B 6/3849

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.07.2024 US 202463673897 P**

(71) Applicant: **Corning Research & Development
Corporation
Corning, New York 14831 (US)**

(72) Inventors:
• **DAINESE, Paulo Clovis Jr.**
**New York, 14870 (US)**
• **WU, Qi**
**New York, 14870 (US)**

(74) Representative: **Reddie & Grose LLP
The White Chapel Building
10 Whitechapel High Street
London E1 8QS (GB)**

(54) **HOLLOW-CORE OPTICAL FIBER HAVING A FLEXIBLE MEMBRANE SEALED END FACE**

(57)     A hollow-core optical fiber for carrying an optical signal is disclosed. The hollow-core optical fiber includes a hollow core fiber body having at least a terminated end that defines an end face and a flexible membrane having an inner end face, an outer end face, and a thickness (t) coupled to the hollow-core fiber body. The inner end face of the flexible membrane is coupled to the end face of the hollow core fiber body to seal the hollow core optical fiber at the first end face. The first flexible membrane has a thickness (t) less than about 5 $\mu$m. A fiber optic cable assembly having a such a hollow-core optical fiber connected to a ferrule of a fiber optic connector and a method of making such a hollow core optical fiber and fiber optic cable assembly are also disclosed.

FIG. 2

EP 4 685 531 A1

## Description

### Priority Application

This application claims the benefit of priority of U.S. Provisional Application No. 63/673,897, filed on July 22, 2024, the content of which is relied upon and incorporated herein by reference in its entirety.

### Technical Field

This disclosure relates generally to optical connectivity, and more particularly to a hollow-core optical fiber having a terminated end that is sealed by an ultra-thin, low-loss flexible membrane, and to a method for making a hollow-core optical fiber with a terminated end sealed by such a flexible membrane.

### Background

Optical fibers are useful in a wide variety of applications, including the telecommunications industry for voice, video, and data transmissions. Benefits of optical fibers include wide bandwidth and low noise operation. Traditional optical fibers include a solid core and a solid cladding that surrounds the core. The core and cladding are typically made of fused silica doped so that the core has a higher index of refraction than the cladding. The core and cladding of the optical fiber are thereby configured to define an optical waveguide that generally confines optical beams propagating through the optical fiber to a region of the optical fiber within and immediately adjacent to the core.

Hollow-core optical fibers are a relatively new type of optical fiber that guides light through a hollow air-filled core rather than through a solid silica core. The latest hollow-core optical fiber designs include an anti-resonant structure that can confine light over a broader range of wavelengths as compared to earlier photonic bandgap hollow-core fibers. These anti-resonant structures enable lower-loss transmission over a wider usable wavelength window than previously available from hollow-core optical fibers. A double nested anti-resonant nodeless optical fiber (DNANF) has been reported as having an attenuation level of 0.174 dB/km at 1550 nm, which is comparable to the performance of germanium doped all-glass fibers. In a more recent paper from OFC 2024, a hollow-core DNANF optical fiber was reported as having a loss of less than 0.11 dB/km. Thus, the performance of hollow-core optical fibers has become competitive with traditional solid-core optical fibers for long-haul transmission.

Hollow-core optical fiber has an effective index of refraction similar to that of air. As a result, light propagates through hollow-core optical fiber at essentially the same speed as light in vacuum (300,000 km/sec), which is about 50% faster than the speed at which light typically propagates through solid-core optical fiber (200,000 km/s). Thus, hollow-core optical fiber offers significantly reduced latency compared to solid-core optical fiber. Due to the improvements in signal loss and useable wavelengths resulting from recent research and development, as well as lower nonlinearity and Raleigh scattering, hollow-core optical fiber is becoming increasingly attractive for use in commercial applications for fiber optic networks.

By way of example, the number of hyperscale data centers has increased dramatically over the last several years. With the rise of generative artificial intelligence (AI), the scale out of such systems requires low-latency interconnects between graphic processing unit (GPU) clusters and memories. In this regard, the scale out of the AI system may be limited by the maximum round trip transmission delay which can be tolerated by the system. For example, for a maximum delay of 250 $\mu$s, GPU clusters and memories may be separated by a maximum distance of about 24. 6 km using solid core fiber optic interconnects. On the other hand, for the same maximum delay of 250 $\mu$s using hollow-core fiber optic interconnects, GPU clusters and memories may be separated by a maximum distance of about 36.9 km. The use of hollow-core optical fiber interconnects would allow, for example, an increased number of regional hyperscale data centers to be used in the AI system.

While the use of hollow-core optical fibers provides a number of advantages in fiber optic network infrastructure, there remain a number of challenges that have traditionally limited their use in fiber optic networks. By way of example, while the equipment and components for terminating solid core optical fibers is well known in the telecommunications industry, such equipment and processes do not readily translate to hollow-core optical fibers. In this regard, for hollow-core optical fibers, it is important to keep the micro-hole (i.e., the hollow core) at the terminated end of the optical fiber clear of dirt, debris, moisture, oil, particulates, and other contaminants. Contamination of the micro-hole disrupts the optical signal at the terminated end of the optical fiber, resulting in increased optical losses across the optical connection (e.g., to another optical fiber or optical device) at the terminated end of the optical fiber. Thus, for example, end face polishing used in conventional termination processes cannot be used with hollow-core optical fibers due to likely contamination of the hollow core. Additionally, some cleaving processes cannot be used with hollow-core optical fibers due to the risk of contamination of the hollow core.

In addition to the above, the terminated ends of hollow-core optical fibers must be kept free from liquids, e.g.,

moisture and condensation. For example, given the small size of optical fibers and their hollow cores, liquid present at the ends of the optical fibers may be wicked or drawn up into the optical fiber, potentially over long lengths of the optical fiber, due to capillary effects. The wicked liquid may take the form of a liquid film on the inner wall of the hollow-core fiber. Alternatively, the liquid may fill a section of the hollow core. In either case, the liquid may alter the light guiding mechanism of the optical fiber, leading to increased optical losses or inoperability in those regions.

Various attempts have been made to protect the ends of hollow-core optical fibers from contamination. For example, in one approach, the ends of the hollow-core optical fiber have been hermetically sealed by fusion splicing or gluing to a solid core optical fiber (e.g., a mode field diameter converting device). However, this approach remains subject to optical losses and is costly. Moreover, this approach also lacks the scalability required to use hollow-core optical fibers on a much larger scale suitable for commercial applications. Thus, there is a need in the telecommunications industry for improved systems and methods for sealing the ends of hollow-core optical fibers to prevent or reduce contamination. More particularly, there is a need for systems and methods for sealing the ends of hollow-core optical fibers in a manner that provides low insertion losses, low costs, and increased scalability.

## Summary

In one aspect of the disclosure, a hollow-core optical fiber for carrying an optical signal is disclosed. The hollow-core optical fiber includes a hollow core fiber body having at least a first terminated end that defines a first end face and a first flexible membrane having an inner end face, an outer end face, and a thickness (t) coupled to the optical fiber. More particularly, the inner end face of the first flexible membrane is coupled to the first end face of the hollow core fiber body to seal the hollow core fiber body at the first end face. The first flexible membrane is ultra-thin, having a thickness (t) less than about 5 μm.

In one embodiment, the first flexible membrane may have an optical thickness (T) that is an integer multiple of a quarter wavelength of the wavelength of the optical signal carried by the hollow-core optical fiber. For example, in one embodiment, the first flexible membrane may have an optical thickness (T) according to the equation: $T = \lambda \left( \frac{1}{4} + m \right)$ ,
where λ is the wavelength of the optical signal carried by the hollow-core optical fiber and m is an integer selected from 0 and positive integers. Selecting the optical thickness (t) in this manner results in a thickness (t) of the first flexible membrane where reflections in the optical signal are minimized or eliminated, e.g., through destructive interference in the reflections.

In one embodiment, the first flexible membrane may be gas permeable and liquid resistant. Thus, the first flexible membrane allows gas to pass through, thereby equalizing the pressure across the first flexible membrane and preventing or reducing damage due to excessive pressure differences. In this embodiment, the first flexible membrane may also block liquids, such as water, from passing through the first flexible membrane and into the hollow core of the optical fiber. Such liquid ingress may potentially negatively alter the optical characteristics of the hollow-core optical fiber, resulting in inoperability or increased optical losses.

In one embodiment, the first end face of the hollow-core fiber body at the first terminated end may be substantially perpendicular to a longitudinal axis of the hollow-core optical fiber. However, in an alternative embodiment, the first end face of the hollow-core fiber body at the first terminated end may be non-perpendicular to the longitudinal axis of the hollow-core optical fiber. By way of example, the first end face of the hollow-core fiber body at the first terminated end may be angled between about 2 degrees and about 5 degrees away from being perpendicular to the longitudinal axis of the hollow-core optical fiber. In an exemplary embodiment, the first end face of the hollow-core fiber body at the first terminated end may be about 3 degrees away from being perpendicular to the longitudinal axis of the hollow-core optical fiber. The angled configuration of the first end face of the hollow-core optical fiber is configured to further reduce and/or eliminate reflections.

In one embodiment, when the first end face of the hollow-core optical fiber is substantially perpendicular to its longitudinal axis, the inner end face and outer end face of the first flexible membrane may also be configured to be substantially perpendicular to its longitudinal axis. In an alternative embodiment, however, when the first end face of the hollow-core optical fiber is slightly angled, the first flexible membrane may also be slightly angled. More particularly, in one embodiment, the inner end face and the outer end face may be non-perpendicular to the longitudinal axis of the first flexible membrane. By way of example, the inner end face and the outer end face may each be angled between about 2 degrees and about 5 degrees away from being perpendicular to the longitudinal axis of the first flexible membrane. In an exemplary embodiment, the inner end face and the outer end face may each be angled about 3 degrees away from being perpendicular to the longitudinal axis of the first flexible membrane.

In one embodiment, the first flexible membrane may include one or more coatings on the inner end face and/or the outer end face of the first flexible membrane. For example, in one embodiment, at least one of the inner end face and the outer end face may include an antireflective coating. Preferably, both the inner end face and the outer end face may include an antireflective coating. Additionally, in one embodiment, the outer end face of the first flexible membrane may include a hydrophobic coating to repel water, dirt, and other debris from the outer end face of the first flexible membrane. Furthermore, in one embodiment, the inner end face of the first flexible membrane may be treated so as to activate the surface of the first flexible membrane and enhance adhesion and coupling of the first flexible membrane to the first end face (e.g., glass) of the hollow-core optical fiber.

In one embodiment, the hollow core fiber body may include a second terminated end to define a second end face. In this embodiment, the optical fiber may further include a second flexible membrane coupled to the second end face of the hollow core fiber body to seal the hollow core fiber body at the second end face. In this way, the hollow-core optical fiber may be sealed at both of its terminated ends by a respective flexible membrane.

In a second aspect of the disclosure, a fiber optic cable assembly is disclosed. The fiber optic cable assembly includes a fiber optic cable carrying a first plurality of optical fibers. A set of the first plurality of optical fibers includes hollow-core optical fibers each according to the first aspect described above. The fiber optic cable assembly further includes at least one ferrule of a fiber optic connector having one or more fiber bores and a ferrule end face. One or more second optical fibers from the first plurality of optical fibers is received in respective one or more fiber bores in the at least one ferrule. At least one of the one or more second optical fibers is from the set of hollow-core optical fibers.

In one embodiment, the outer end face of the first flexible membrane from the at least one of the one or more second optical fibers from the set of hollow-core optical fibers may be recessed from the ferrule end face when received in the at least one fiber bore of the at least one ferrule. For example, the outer end face of the first flexible membrane may be recessed about 10 $\mu$m from the ferrule end face.

In a third aspect of the disclosure, a method of making at least one hollow core optical fiber is disclosed. The method includes cleaving at least one hollow core optical fiber to define a first end face at a first terminated end of the hollow-core optical fiber, providing at least one first flexible membrane having an inner end face, an outer end face, and a thickness (t), wherein the thickness (t) of the flexible membrane is less than about 5 $\mu$m, and applying the inner end face of the at least one first flexible membrane to the first end face at the first terminated end of the at least one hollow core optical fiber to seal the first end of the at least one hollow-core optical fiber and prevent the ingress of contaminants into the hollow core of the optical fiber.

In one embodiment, cleaving the at least one hollow core optical fiber may include laser cleaving the at least one hollow core optical fiber to prevent debris and/or molten glass from being generated by the cleaving process. In one embodiment, applying the inner end face of the at least one first flexible membrane to the first end face of the at least one hollow core optical fiber may include bonding the inner end face of the at least one first flexible membrane to the first end face of the at least one hollow core optical fiber.

In one embodiment, the at least one hollow-core optical fiber may include a plurality of hollow-core optical fibers and the at least one first flexible membrane may include a plurality of first flexible membranes. In this embodiment, providing the plurality of first flexible membranes may include forming a pellicle having a cross-sectional area ($A_p$) and a thickness ($t_p$), where the cross-sectional area ($A_p$) of the pellicle is much greater than the cross-sectional area ($A_f$) of the first end face of each of the plurality of hollow-core optical fibers, and where the pellicle has a thickness ($t_p$) that is substantially equal to the thickness (t) of the first flexible membrane that is to seal each of the plurality of hollow-core optical fibers. The method further includes coupling the pellicle to a masking substrate having a plurality of through bores each being configured to receive a respective one of the plurality of hollow-core optical fibers therethrough. Moreover, in this embodiment, applying the inner end face of the plurality of first flexible membranes to the first end faces of the plurality of hollow-core optical fibers may include inserting the plurality of hollow-core optical fibers through respective through bores in the masking substrate so as to contact the first end faces with the pellicle at respective engaged portions of the pellicle. This contact between the engaged portion of the pellicle and the first end faces of the hollow-core optical fibers forms the first flexible membranes on respective first end faces of the hollow-core optical fibers.

In one embodiment, for example, the plurality of hollow-core optical fibers may be inserted through the plurality of through bores of the masking substrate at substantially the same time. This allows a large number of hollow-core optical fibers to be processed in batches. For example, in one embodiment, the number of hollow core optical fibers that may be processed in a single batch may be over 200,000, preferably over 300,000, and even more preferably over 400,000. A process that seals the terminated ends of such large numbers of hollow-core optical fibers in a single batch process lends itself to commercial implementation of hollow-core optical fiber in a fiber optic network.

In one embodiment, the method may further include bonding the engaged portions of the pellicle to the respective first end face of each of the plurality of hollow-core optical fibers. This secures the first flexible membranes to the first end faces of the hollow-core optical fibers.

In yet a fourth aspect of the disclosure, a method of making a fiber optic cable assembly is disclosed. The method includes providing a fiber optic cable carrying a first plurality of optical fibers. A set of the first plurality of optical fibers includes hollow-core optical fibers each made according to the third aspect described above. The method further includes providing at least one ferrule of a fiber optic connector, the at least one ferrule having at least one fiber bore and a ferrule end face, inserting the at least one hollow-core optical fiber from the set into the at least one fiber bore in the at least one ferrule, and securing the at least one hollow-core optical fiber from the set within the at least one fiber bore in the at least one ferrule.

In one embodiment, inserting the at least one hollow-core optical fiber from the set into the at least one fiber bore in the at least one ferrule may further include inserting the at least one hollow-core optical fiber from the set into the at least one fiber bore so that the outer end face of the first flexible membrane is recessed from the ferrule end face of the at least one ferrule. For example, the outer end face of the first flexible membrane may be recessed about 10 $\mu$m from the ferrule end face of the at least one ferrule. In one embodiment, the at least one ferrule may include a plurality of fiber bores (e.g., a multi-fiber ferrule), and the method may further include inserting a second plurality of optical fibers from the first plurality of optical fibers into respective fiber bores of the plurality of fiber bores in the at least one ferrule, where at least one of the second plurality of second optical fibers is from the set of hollow-core optical fibers, and securing the second plurality of optical fibers within the respective fiber bores of the plurality of fiber bores in the at least one ferrule.

## Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.

Fig. 1 is a diagrammatic cross-sectional view of an exemplary hollow-core optical fiber.

Figs. 2 and 3 are perspective views of the hollow-core optical fiber shown in Fig. 1 sealed by a flexible membrane at a terminated end thereof according to one embodiment of the disclosure.

Figs. 4 is a graph depicting a simulation of insertion losses versus wavelength for different thicknesses t of the flexible membrane.

Fig. 5 is an enlarged view of the of the graph shown in Fig. 4 about a wavelength of 1550 nm.

Fig. 6 is a side plan view of a hollow-core optical fiber and flexible membrane according to another embodiment of the disclosure.

Fig. 7 is a partial cross-sectional view of a flexible membrane according to another embodiment of the disclosure.

Fig. 8 is a flowchart of a method for making the flexible-membrane sealed hollow-core optical fiber according to an embodiment of the disclosure.

Fig. 9 is a perspective view of a pellicle and a masking substrate used to mass produce flexible-membrane sealed hollow-core optical fibers.

Fig. 10 is a perspective view of a ferrule of a fiber optic connector of a fiber optic cable assembly having a flexible-membrane sealed hollow-core optical fiber received therein.

Fig. 11 is an enlarged perspective view of the fiber bore of the ferrule shown in Fig. 10 illustrating the end of the flexible-membrane sealed hollow-core optical fiber being recessed within the fiber bore of the ferrule.

Fig. 12 is a perspective view of a multi-fiber ferrule of a fiber optic connector of a fiber optic cable assembly having a flexible-membrane sealed hollow-core optical fiber received therein.

It should be understood that the appended drawings are not necessarily to scale and may present a somewhat simplified representation of various features illustrative of the basic principles of the disclosure. For example, certain features illustrated by the drawings may be enlarged or distorted relative to others to facilitate visualization and a clear understanding.

## Detailed Description

Various embodiments will be further clarified by examples in the description below. In general, the description relates to a hollow-core optical fiber sealed at a terminated end thereof by an ultra-thin, low-loss flexible membrane to keep contaminants from entering the hollow core of the optical fiber and negatively impacting optical performance (e.g., increasing optical losses) of the optical fiber. The thickness of the flexible membrane may be selected based on a quarter wavelength relationship of the wavelength of the optical signal carried in the hollow-core optical fiber. In embodiments disclosed herein, the thickness of the flexible membrane may be less than about 5 $\mu$m. Such a small thickness helps maintain insertion losses associated with the flexible membrane at low levels and is about an order of magnitude less in thickness as compared to other known coverings to seal or close off the hollow-core of the optical fibers.

Additionally, the flexible membrane may include various coatings that further improve the performance of the hollow-core optical fiber. For example, the flexible membrane may include an antireflective coating on one or both sides of the flexible membrane. An outer side of the flexible membrane may include a hydrophobic coating to repeal water, dirt, and other debris to keep contaminants away from the terminated end of the hollow-core fiber. The inner side of the flexible membrane may include a bond-enhancing coating to aid the flexible membrane in adhering to the end face (e.g., made from glass) of the hollow-core optical fiber. Moreover, the inner and outer surfaces of the flexible membrane may be angled (slightly away from being perpendicular to a longitudinal axis thereof) to further reduce reflections at the flexible membrane.

Furthermore, a batch-type process is disclosed that allows for making a large number of flexible-membrane sealed hollow-core optical fibers. For example, in one batch process, over 400,000 flexible-membrane sealed hollow-core optical fibers may be produced. This opens the possibility of using hollow-core optical fibers in commercial scale fiber optic networks. These and other benefits are discussed more fully below.

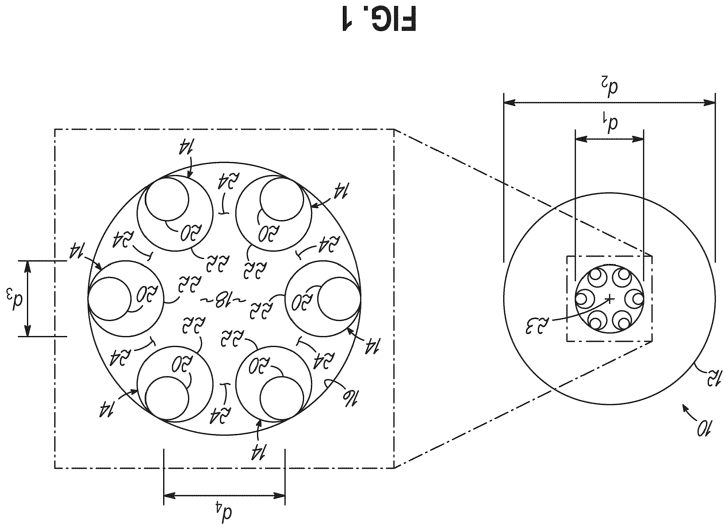

Fig. 1 depicts an axial cross-sectional view of an exemplary hollow-core optical fiber 10. The hollow-core optical fiber 10 includes a cladding 12 that defines a hollow-core fiber body and a plurality of structural tubes 14. The cladding 12 includes an inner surface 16 on which the structural tubes 14 are arranged circumferentially to define a hollow core 18. The depicted embodiment includes six structural tubes 14 each including a nested structure having an inner tube 20 and an outer tube 22. However, it should be understood that the hollow-core optical fiber 10 may be used with other numbers of structural tubes 14, as well as structural tubes 14 that comprise a single tube (i.e., are unnested) or include more than two nested tubes.

The cladding 12 and structural tubes 14 may be formed, for example, of doped or undoped silica glass. The hollow-core fiber body defined by cladding 12 may have an inner diameter $d_1$ and an outer diameter $d_2$, and the structural tubes 14 may have an outer diameter $d_3$. The dimensions of the cladding 12 and structural tubes 14 may be selected so that the hollow-core 18 has a diameter $d_4$. The diameter $d_4$ of the hollow-core 18 may be defined, for example, as twice the minimum distance between the surface of each structural tube 14 and the optical axis 23 of the hollow-core optical fiber 10. The dimensions of the cladding 12 and structural tubes 14 may be selected so that adjacent structural tubes 14 are separated by a gap 24. The gap 24 may prevent adjacent structural tubes 14 from contacting each other. The gap 24 may thereby avoid the formation of a waveguide along a line of contact between the structural tubes 14 due to a doubling of the wall thickness of the structural tubes 14 where the structural tubes 14 come into contact.

The dimensions and other characteristics of the cladding 12 and structural tubes 14 (e.g., the refractive index or indices) may be selected to define a waveguide that generally confines optical beams propagating through the hollow-core optical fiber 10 to the hollow core 18 itself. The thicknesses of the walls of the structural tubes 14 may be selected to provide an anti-resonant effect that reduces leakage of optical beams from the hollow core 18 into the structural tubes 14. This anti-resonant effect may be optimized by providing the structural tubes 14 with a wall thickness that is an odd multiple of a quarter wavelength of the optical beam. In an exemplary embodiment of the depicted hollow-core optical fiber 10, $d_1$ may be about 100 $\mu$m, $d_2$ may be about 250 $\mu$m, $d_3$ may be about 30 $\mu$m, and $d_4$ may be about 40 $\mu$m. However, the optical fiber disclosed herein is not limited to hollow-core optical fibers 10 having a particular set of structural dimensions.

Hollow-core optical fibers 10 may have different structures, which include unnested anti-resonant hollow-core optical fiber 10, single nested anti-resonant hollow-core optical fiber 10 (depicted by Fig. 1), multiple nested (e.g., double nested) anti-resonant hollow-core optical fiber 10. One type of hollow-core optical fiber 10 manufactured for internal use by Corning Inc, an optical technology company headquartered in Corning, New York, United States, has a nominal mode field diameter of 32 $\mu$m. This mode field diameter is larger than those reported for hollow-core optical fibers 10 in the literature, which typically have a mode field diameter in the range of 10-22 $\mu$m for double nested anti-resonant nodeless optical fiber, and 22-28 $\mu$m for single nested anti-resonant nodeless fiber.

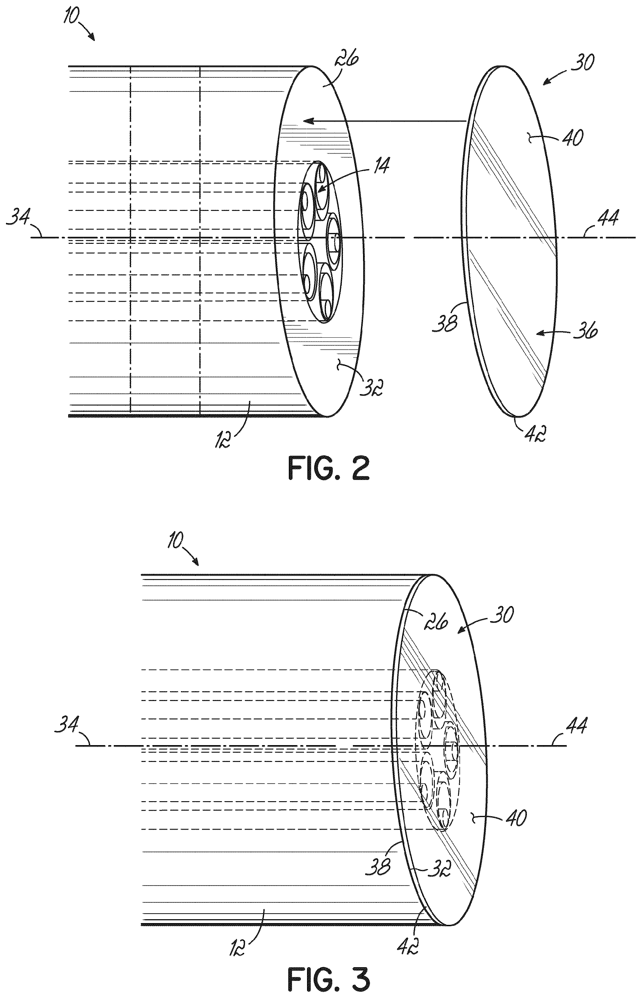

As noted above, one of the challenges of using hollow-core optical fiber on a large commercial scale is preventing contamination at the terminated ends of the optical fiber. Figs. 2 and 3 illustrate the sealing of a terminated end 26 of the hollow-core optical fiber 10 in accordance with an embodiment of the disclosure. In this regard, the terminated end 26 of the hollow-core optical fiber 10 may be sealed with a flexible membrane 30 so as to reduce or prevent contamination of the hollow-core optical fiber 10 at the terminated end 26. The terminated end 26 of the hollow-core optical fiber 10 defines an end face 32 to which the flexible membrane 30 is configured to be sealed. In one embodiment, the end face 32 of the hollow-core optical fiber 10 is generally planar and may be substantially perpendicular (e.g., +\- 1 degree) to a central longitudinal axis 34 of the hollow-core optical fiber 10. As will be described in further detail below, the end face geometry is not limited to a perpendicular configuration relative to the longitudinal axis 34 but may have a non-perpendicular angled relationship relative to the longitudinal axis 34. In one embodiment, the hollow-core optical fiber 10 may be cleaved to define the terminated end 26 through a laser process that avoids the need for polishing, or other contaminant-producing processes, to provide a precise and clean end face 32 of the hollow-core optical fiber 10. Such laser cleaving devices and processes are known in the telecommunications industry and a further description will not be provided herein. Other cleaving processes that do not contaminate the hollow-core optical fiber 10 at the terminate end 26 may also be used.

In one embodiment, the flexible membrane 30 includes a disc-shaped body 36 having an inner end face 38, an outer end face 40, and at least one side wall 42 extending between the inner end face 38 and the outer end face 40. The inner end face 38 is configured to generally face toward and engage with the end face 32 of the hollow-core optical fiber 10. The outer end face 40 is configured to face away from the end face 32 of the hollow-core optical fiber 10. The inner end face 38 and the outer end face 40 are configured to be substantially parallel (+\- 1 degree) to each other. Moreover, in one embodiment, the inner end face 38 and the outer end face 40 may be substantially perpendicular (e.g., +\- 1 degree) to a central longitudinal axis 44 of the flexible membrane 30. Similar to the above, however, and as will be described in further detail below, the end face geometry of the inner end face 38 and outer end face 40 is not limited to a perpendicular configuration relative to the longitudinal axis 44 of the flexible membrane 30 but may have a non-perpendicular angled relationship relative to the longitudinal axis 44.

In one embodiment, the outer dimension of the flexible membrane 30 is configured to be substantially equal to or slightly less than the outer dimension of the cladding 12 of the hollow-core optical fiber 10 to which the flexible member 30 is attached. For example, in one embodiment, the flexible membrane 30 may be generally circular in shape and have a diameter $d_m$ substantially equal to or slightly less than the outer diameter $d_2$ of the cladding 12 of the hollow-core optical fiber 10. Thus, for example, the diameter $d_m$ of the flexible membrane 30 may be about 250 $\mu$m. However, aspects of the present disclosure are not limited to flexible membranes 30 having a particular size or diameter, so long as the flexible membrane 30 is capable of sealing off the hollow core 18 of the optical fiber 10. In other words, relative to the longitudinal axis 44, the periphery of the flexible membrane 30 should not be less than the radius of the inner surface 16 of the cladding 12 ($d_1$/2) and not be greater than the radius of the outer surface of the cladding 12 ($d_2$/2).

The length of the side wall 42 defines a thickness t of the flexible membrane 30. The thickness t of the flexible membrane 30 is configured to be much less than an outer dimension of the flexible membrane 30, which is itself limited by the outer dimension of the hollow-core optical fiber 10 to which the flexible membrane 30 is configured to be attached. In one embodiment, the aspect ratio, AR, of the flexible membrane 30 may be defined as

$$AR = \frac{t}{D} \, ,\qquad\qquad(1)$$

where t is the thickness of the flexible membrane 30 and D is a characteristic dimension of the outer dimension of the flexible membrane 30, e.g., $d_2$ for a circular flexible membrane 30. In one embodiment, the flexible membrane 30 may have an aspect ratio of less than about 10%, preferably less than about 5%, and even more preferably less than about 2%. By way of example, for a flexible membrane 30 having an outer diameter $d_m$ of 250 $\mu$m, the thickness t of the flexible membrane 30 should be less than about 5 $\mu$m.

To understand this range in aspect ratio AR of the flexible membrane 30, one may initially look to reflections at the flexible membrane 30. In this regard, if the flexible membrane 30 has an optical refractive index of n and a thickness of t, then the Fresnel reflection per surface at near normal incidence angle is:

$$R = \left(\frac{n-1}{n+1}\right)^2 \, ,\qquad\qquad(2)$$

where R is the reflective loss. However, due to thin film interference, the reflective loss is provided by:

$$R = 2r\left[1 + \cos\left(\frac{4\pi nt}{\lambda}\right)\right] \, ,\qquad\qquad(3)$$

where r is Fresnel reflectivity from a single surface (i.e., given by Eq. (2)), and $\lambda$ is the wavelength of light incident on the flexible membrane 30 (i.e., the wavelength of the light beam in the hollow-core optical fiber 10). To eliminate reflective loss (i.e., R=0), then the following relationship between the incident wavelength $\lambda$ and the thickness t of the flexible membrane 30 may be derived as:

$$nt = \lambda\left(\frac{1}{4} + m\right) \, ,\qquad\qquad(4)$$

where nt is the optical distance, T, and m is an integer 0, 1, 2, 3, ....This is the so-called quarter wave optical thickness. Most telecommunication applications take place in the C-band wavelengths having, for example, a center wavelength $\lambda_0$ = 1550 nm. For such applications, the optical distance T for the flexible membrane 30 for the first several orders (m=0, 1, 2, 3) is given by:

$$T_0 = 387.5 \, nm\qquad\qquad(5)$$

$$T_1 = 1{,}937.5 \, nm\qquad\qquad(6)$$

$$T_2 = 3,487.5\,nm \tag{7}$$

$$T_3 = 5,037.5\,nm \tag{8}$$

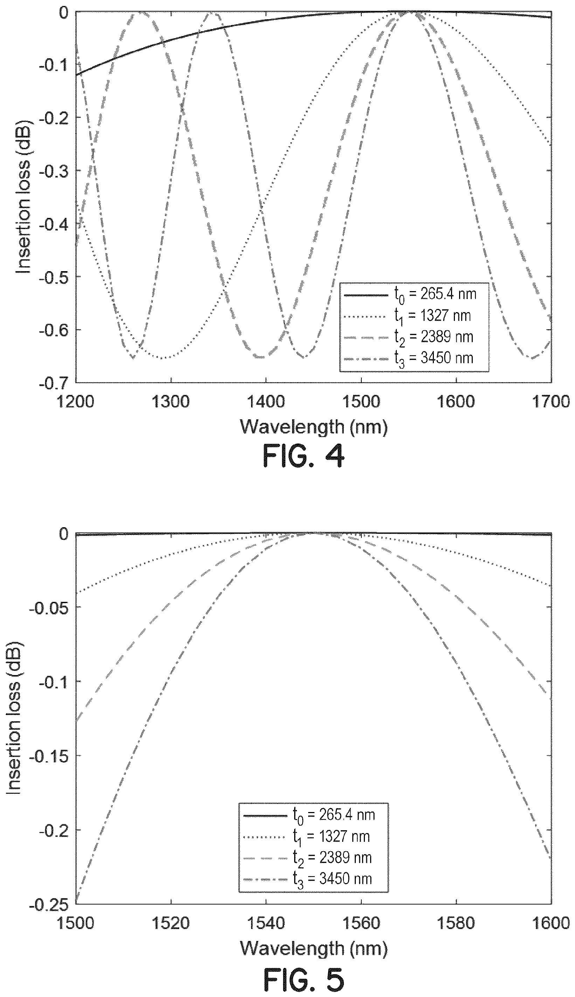

Using Eq. (3), Figs. 4 and 5 depict graphs illustrating the insertion loss due to the presence of the flexible membrane 30 at the terminated end 26 of the hollow-core optical fiber 10. In this figure, the flexible membrane 30 is made of nitrocellulose having a refractive index of n=1.46. The graphs show the insertion loss for four different thicknesses of the flexible membrane 30. Based on the definition of the optical distance, T = nt, and equations (5)-(8) above, the four thicknesses of the flexible membrane 30 modelled in Figs. 4 and 5 are:

$$t_0 = 265.4\,nm \tag{9}$$

$$t_1 = 1,327\,nm \tag{10}$$

$$t_2 = 2,389\,nm \tag{11}$$

$$t_3 = 3,450\,nm \tag{12}$$

Fig. 4 is a blown-up view of the graph shown in Fig. 4 about the center wavelength $\lambda_0$. For a flexible membrane 30 having a thickness of $t_0$, the modelling demonstrates that the insertion loss $L_i$ remains very low over a very wide range of wavelengths. For example, the insertion loss $L_i$ remains less than about 0.1 db from the O-band (1260 $nm \leq \lambda \leq$ 1360 $nm$) to the L-band ($1565 \leq \lambda \leq 1625$). For the C-band (1530 $nm \leq \lambda \leq$ 1565 $nm$), the coupling loss $L_i$ is less than 0.01 db.

From a manufacturing standpoint, it may be desirable to use a thicker flexible membrane 30. For example, for a flexible membrane 30 having a thickness of $t_1$, the modelling demonstrates that the insertion loss $L_i$ remains low over several wavelength bands, including the S-band (1460 $nm \leq \lambda \leq$ 1530 $nm$), C-band, and L-bands. For example, the insertion loss $L_i$ remains below 0.05 db over these wavelength bands, and below 0.01 db for the C-band. As can be appreciated from Figs. 4 and 5, higher order membrane thicknesses may be used for narrower wavelength windows. For example, for applications that remain in a relatively tight window in the C-band, the flexible membrane 30 may have a thickness t on the order of $t_3$. For example, Fig. 5 illustrates that a flexible membrane 30 having a thickness t of $t_3$ can cover the C-band with an insertion loss $L_i$ less than about 0.1 db, and closer to an insertion loss $L_i$ of less than about 0.05 db.

In one embodiment, the flexible membrane 30 may be formed from a polymer material. By way of example, and without limitation, the polymer material may include nitrocellulose (CN; as was used in the simulation), cellulose acetate (CA), cellulose esters (CE), polysulfone (PSU), polyethersulfone (PES), polyacrylonitrile (PAN), polyamide, polyimide, polyethylene (PE), polypropylene (PP), polytetrafluoroethylene (PTFE), polyvinylidene fluoride (PVDF) and polyvinyl chloride (PVC). Other materials for the flexible membrane 30 may also be possible. For example, the flexible membrane 30 may be formed from various inorganic materials, including, for example, silicon oxide or silicon nitride. In an exemplary embodiment, the flexible membrane 30 may be formed from a gas permeable, liquid resistant material. In this way, gases may pass through the flexible membrane 30, and therefore equalize pressure across the flexible membrane 30. Equalizing the pressure across the flexible membrane 30 increases the useful life of the flexible membrane 30 and reduces potential damage. However, liquids cannot pass through the flexible membrane 30, thereby preventing the ingress of substances, such as water, oil, etc., that can wick into the hollow-core 18 of the optical fiber 10. Liquid ingress can detrimentally impact the optical properties of the optical fiber and increase optical losses across interfaces at the terminated end 26 of the hollow-core optical fiber 10.

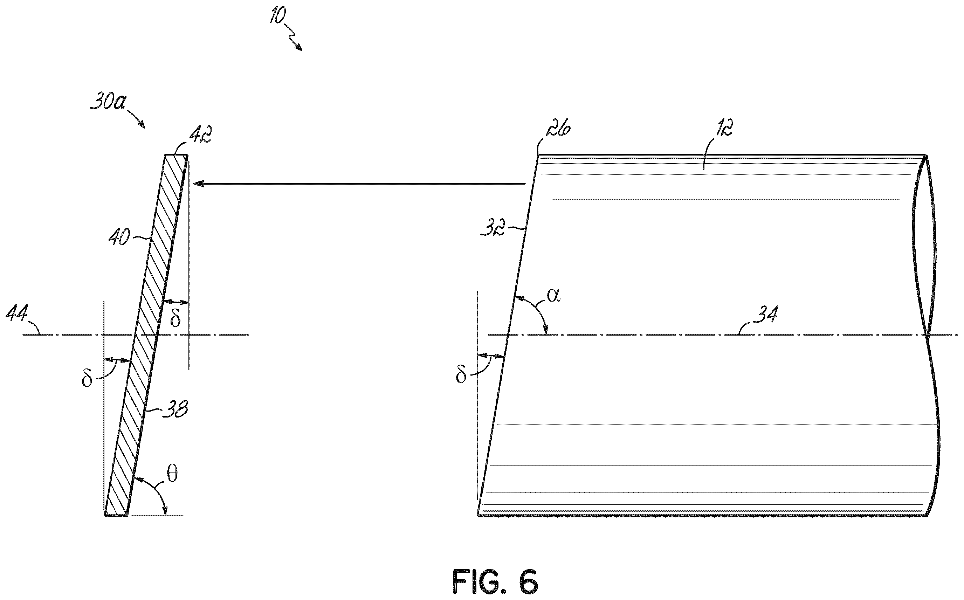

Fig. 6 illustrates a flexible membrane 30a according to another embodiment of the disclosure. The flexible membrane 30a is similar to the flexible membrane 30 shown and described above, and like reference numbers will refer to like features in the two embodiments. Additionally, only the primary features that differ between flexible membrane 30 and flexible membrane 30a will be discussed. In this regard, the primary difference between flexible membrane 30 and flexible membrane 30a is the angle $\alpha$ that the end face 32 of the hollow-core optical fiber 10 makes relative to its longitudinal axis 34 and the angle $\theta$ that the inner end face 38 and the outer end face 40 of the flexible membrane 30 make relative to its longitudinal axis 44. As described above, the end face 32 of the hollow-core optical fiber 10 was configured to be substantially perpendicular to the longitudinal axis 34 of the hollow-core optical fiber 10. Additionally, the inner end face 38 and the outer end face 40 of the flexible membrane 30 were configured to be substantially perpendicular to the longitudinal axis 44 of the flexible membrane 30.

However, in this embodiment, to reduce or further reduce reflections at the interface between the hollow-core optical fiber 10 and the flexible membrane 30, these end faces 32, 38, 40 may be configured to be non-perpendicular relative to their respective longitudinal axes 34, 44. By way of example, and without limitation, the end faces 32, 38, 40 may be angled just a few degrees $\delta$ away from being perpendicular to their respective longitudinal axes 34, 44. In an exemplary embodiment, $\delta$ may be between about 2 degrees and about 5 degrees, and in a preferred embodiment, $\delta$ may be about 3 degrees. Angling the end faces 32, 38, 40 this slight amount suppresses back reflections at the interface between the hollow-core optical fiber 10 and the flexible membrane 30a.

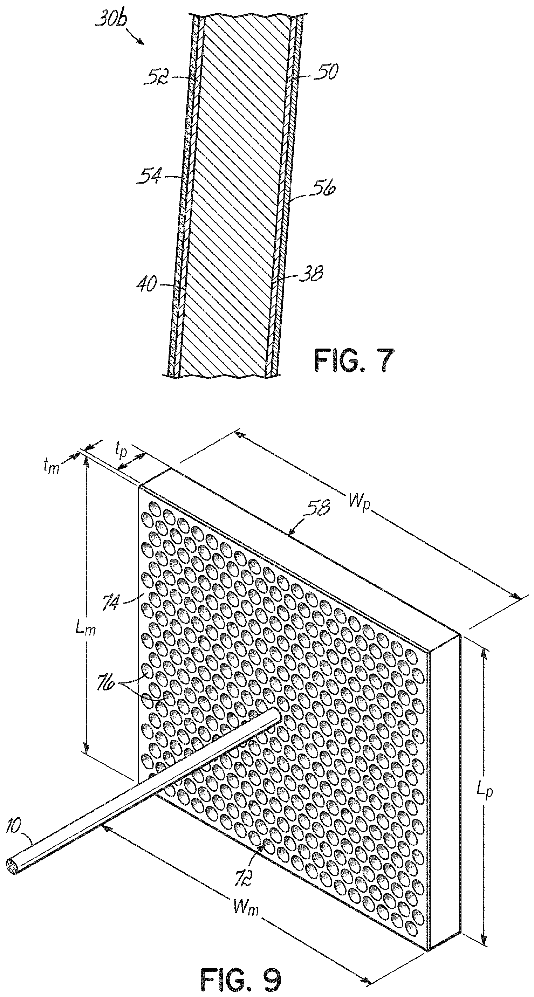

Fig. 7 illustrates a flexible membrane 30b according to another embodiment of the disclosure. The flexible membrane 30b is similar to the flexible membrane 30 shown and described above, and like reference numbers will refer to like features in the two embodiments. Additionally, only the primary features that differ between flexible membrane 30 and flexible membrane 30b will be discussed. In this regard, the primary difference between flexible membrane 30 and flexible membrane 30b is various layers applied to the inner end face 38 and/or the outer end face 40 of the flexible membrane 30b. In practice, as the thickness t of the flexible membrane 30 increases, there can be a shift in the center wavelength. Moreover, fabrication tolerance for higher order quarter wave thickness may be more demanding. However, transmission and bandwidth performance of the flexible membrane 30 may be enhanced by applying an antireflective coating to one or both end faces 38, 40 of the flexible membrane 30. Fig. 7, for example, illustrates an antireflective coating 50 on the inner end face 38 of the flexible membrane 30 and an antireflective coating 52 on the outer end face 40 of the flexible membrane 30. The antireflective coatings 50, 52 allow for low insertion loss across a bandwidth as broad as the zero-order quarter wave thickness $t_0$ with little sensitivity to the membrane thickness t.

In one embodiment, the antireflective coatings 50, 52 may be made from a low index fluoropolymer, such as, for example, Teflon™ AF. The antireflective coatings 50, 52 may be made of other materials, including, for example, magnesium fluoride. Other materials may also be possible.

The flexible membrane 30 may include additional coatings to further reduce insertion loss, increase bandwidth applicability, and/or facilitate contamination proofing of the hollow-core optical fiber 10. These additional coatings may be used alone or in combination with the antireflective coatings 50, 52 described above. In this regard, and as illustrated in Fig. 7, the flexible membrane 30 may include a liquid resistant coating 54 on the outer end face 40 of the flexible membrane 30. For example, the outer end face 40 (or another coating thereon) may be chemically treated so as to be strongly hydrophobic, and therefore repel water, dust, and other contaminants that may come into contact with the terminated end 26 of the hollow-core optical fiber 10. In one embodiment, the liquid resistant coating 54 may be made from one or more of acrylics, epoxies, polyethylene, polystyrene, polyvinylchloride, polytetrafluorethylene, polydimethylsiloxane, polyesters, and polyurethanes.

Furthermore, Fig. 7 also illustrates a bond-enhancing treatment 56 on the inner face 38 of the flexible membrane 30. In this regard, the inner end face 38 may be activated so as to increase adhesion of the flexible membrane 30 to the end face 32 of the hollow-core optical fiber 10, and more particularly to the portion of the end face 32 formed by the (glass) cladding 12.

The various coatings/treatments 50, 52, 54, 56 may be applied to/performed on the flexible membrane 30 using several different processes. By way of example, and without limitation, the coatings 50, 52, 54, 56 may be applied using chemical vapor deposition (CVD) processes. For example, thermal vapor deposition, E-Beam vapor deposition, and plasma-enhanced deposition may be used to apply the coatings 50, 52, 54, 56 onto the flexible membrane 30. Alternatively, wet-chemical processes, including dipping, spraying, and flooding may be used. Furthermore, various liquid jetting processes may also be used to apply the coatings 50, 52, 54, 56 onto the flexible membrane 30. It should be understood, however, that other processes may be used and remain within the scope of the present disclosure.

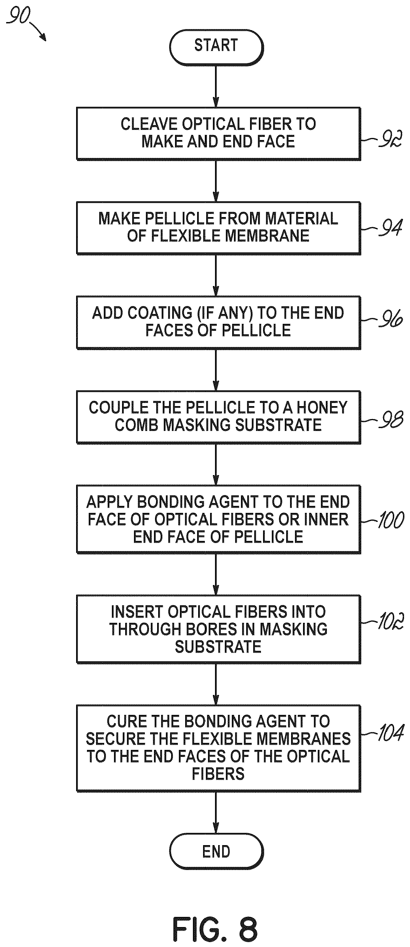

Fig. 8 illustrates a method 90 for making a hollow-core optical fiber 10 having the terminated end 26 sealed by the flexible membrane 30 according to an embodiment of the disclosure. In a first step 92, the hollow-core optical fiber 10 may be cleaved to produce a terminated end face 32. The process to cleave the optical fiber 10 may include clean processes that limit the amount of dust, debris, dirt, etc. at the terminated end 26. For example, laser-based processes may be used. The process may be performed so that the end face 32 is substantially perpendicular to the longitudinal axis 34 of the hollow-core optical fiber 10 or non-perpendicular to the longitudinal axis 34 of the hollow-core optical fiber 10 (e.g., angled by about 3 degrees from perpendicular). The method 90 also includes, in another step 94, making an ultra-thin pellicle 58 formed from the material for the flexible membrane 30. The material selections for the flexible membrane 30 were provided above. The pellicle 58 has a thickness $t_p$ corresponding to the desired thickness t of the flexible membrane 30. While the thickness $t_p$ of the pellicle 58 corresponds to the thickness t of the flexible membrane 30, the other dimensions of the pellicle 58 may be much larger than the characteristic dimension D of the flexible membrane 30. By way of example, the pellicle 58 may have a length $L_p$ and a width $W_p$ between about 10 cm and about 20 cm. In an exemplary embodiment, the pellicle 58 may be square in shape and have a length $L_p$ and width $W_p$ of about 15 cm. In other words, the pellicle 58 has a cross-sectional area $A_p$ and a thickness $t_p$. The cross-sectional area $A_p$ of the pellicle 58 is much greater than the cross-sectional area $A_f$ of the end face 32 of each of the plurality of hollow-core optical fibers 10. However, the pellicle 58 is configured to have a thickness $t_p$ that is substantially equal to the thickness t of the flexible membrane 30. Other shapes and dimensions of the pellicle 58 are possible and remain within the scope of the present disclosure.

In a next optional step 96, any additional coatings 60, 62, 64, 66 may be applied to the pellicle 58, and more particularly to an inner end face 68 and an outer end face 70 of the pellicle 58. By way of example, the additional coatings 60, 62, 64, 66 may correspond to the coatings 50, 52, 54, 56 on the flexible membrane 30, respectively, and be made from those material described above. Moreover, the various processes for applying the additional coatings 60, 62, 64, 66 are also described above. In one embodiment, the coatings 60, 62, 64, 66 may substantially cover the inner end face 68 and the outer end face 70 of the pellicle 58.

In another step 98, the pellicle 58 may be coupled to a masking substrate 72 to support the pellicle 58 during application onto the terminated ends 26 of the hollow-core optical fibers 10. In one embodiment, for example, the pellicle 58 may be bonded to the masking substrate 72. As illustrated in Fig. 9, the masking substrate 72 includes a substrate body 74 having a length $L_m$ and a width $W_m$ substantially corresponding to the length $L_p$ and width $W_p$ of the pellicle 58. The thickness $t_m$ of the masking substrate 72 may be relatively thin, such as between about 0.1 mm to about 1.0 mm. In one embodiment, the masking substrate 72 may have a honeycomb design including a plurality of through bores 76 arranged in, for example, a rectangular array in the masking substrate 72. The plurality of through bores 76 may be arranged differently, such as in a hexagonal array. Each of the through bores 76 is configured to receive the terminated end 26 of the hollow-core optical fiber 10. Accordingly, the shape and size of the through bores 76 are configured to correspond with the shape and size of the hollow-core optical fibers 10 received therein. For example, the through bores 76 may be circular in shape and have a diameter just slightly larger than the outer diameter $d_2$ of the hollow-core optical fiber 10 to allow the hollow-core optical fibers 10 to be slidingly received in the through bores 76. Such masking substrates 72, and methods for making such masking substrates 58 are well known in the printing and lithography fields, and thus will not be described further herein for sake of brevity.

In a next step 100, a bonding agent may be applied to at least one of the end face 32 of the hollow-core optical fibers 10 and the inner end face 68 of the pellicle 58. The process for applying the bonding agent may include those processes described above for applying coatings 50, 52, 54, 56 to the flexible membrane 30 or other known application methods. In a further step 102, the hollow-core optical fibers 10 may be inserted into and through the through bores 76 in the masking substrate 72. The portion of the pellicle 58 that makes contact with the end faces 32 of the hollow-core optical fibers 10, referred to herein as the engaged portion, essentially break away from the surrounding region of the pellicle 58 such that the engaged portion of the pellicle 58 remains with the end face 32 of the hollow-core optical fibers 10 to define the flexible membranes 30 applied to the end faces 32 of the hollow-core optical fibers 10. In a next step 104, the bonding agent may then be cured to secure the flexible membranes 30 to the end faces 32 of their respective hollow-core optical fibers 10.

The method 90 described above provides a number of advantages. For example, with the pellicle 58 having a size on the order of 15 cm x 15 cm, and the hollow-core optical fibers 10 having a diameter of 250 $\mu$m, the number of hollow-core optical fibers 10 that may be batch processed to include the flexible membranes 30 may be greater than 200,000 optical fibers 10, preferably greater than 300,000 optical fibers 10, and even more preferably greater than 400,000 optical fibers 10. Thus, the process for sealing a terminated end 26 of a hollow-core optical fiber 10 is highly scalable, thus making hollow-core optical fiber networks commercially viable.

The membrane-sealed hollow-core optical fibers 10, as described above, may be connectorized with ferrules and connector bodies, as is known in the telecommunications industry. In one embodiment, a fiber optic cable assembly 120 may include a fiber optic cable 122 carrying a first plurality of optical fibers 124 and at least one fiber optic connector 126 at a terminated end 128 of the fiber optic cable 122. At least one, and preferably a set of the first plurality of optical fibers 124 may be hollow-core optical fibers 10 as described above. In one embodiment, each of the first plurality of optical fibers is a hollow-core optical fiber 10. In an alternative embodiment, only some of the first plurality of optical fibers are hollow-core optical fibers. Each of the at least one fiber optic connector 126 at the terminated end 128 of the fiber optic cable 122 includes a ferrule 130 for receiving one or more of the first plurality of optical fibers 124. In one embodiment, the ferrule 130 may be a single fiber ferrule 130. In an alternative embodiment, however, the ferrule 130 may be a multi-fiber ferrule.

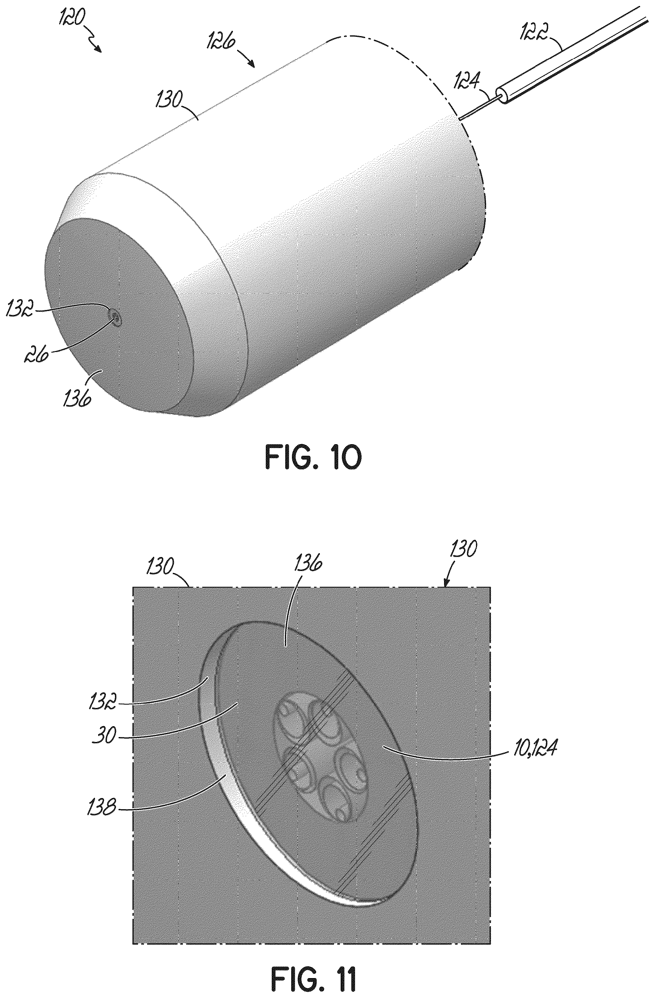

By way of example, Fig. 10 illustrates a single fiber ferrule 130 that receives a single optical fiber 124 of the plurality of optical fibers 124, where the single optical fiber 124 is a hollow-core optical fiber 10. In this regard, the ferrule 130 includes at least one fiber bore 132 that receives the terminated end 26 of the hollow-core optical fiber 10 therein. For single fiber ferrules 130, there is only one fiber bore 132. For a multi-fiber ferrule 130, however, the ferrule 130 may include a plurality of fiber bores 132 in an array, such as a 1 x 12 or 2 x 12 array. For a multi-fiber ferrule, a second plurality of optical fibers 134 selected from the first plurality of optical fibers 124 may be received in respective fiber bores 132 in the ferrule 130. At least one of the second plurality of optical fibers 134 is from the set of hollow-core optical fibers 10. In one embodiment, for example, each of the second plurality of optical fibers is a hollow-core optical fiber 10. In an alternative embodiment, only some of second plurality of optical fibers 134 are hollow-core optical fibers 10.

The ferrule 130 includes a ferrule end face 136. When the single optical fiber 126 or the second plurality of optical fibers 134 is inserted into the fiber bore (s) 132, for those optical fibers that are hollow-core optical fibers 10, the end face 32 of the hollow-core optical fiber 10 may be slightly recessed within the fiber bore 132. For example, in one embodiment, and as best shown in Fig. 11, the outer end face 40 of the flexible membrane 30 may be recessed relative to the ferrule end face 136 within the fiber bore 132 about 10 $\mu$m. This recess 138 is configured to further protect the ends of the hollow-core optical fibers 10 when incorporated within a ferrule 130 of a fiber optic connector 126.

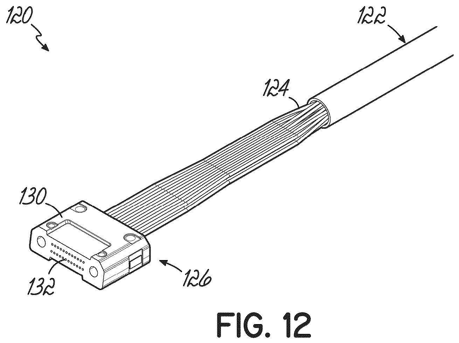

Fig. 12 illustrates a fiber optic cable assembly 120 having a fiber optic cable 122 carrying a first plurality of optical fibers 124. The terminated ends 128 of the first plurality of optical fibers 124 are inserted into the fiber bores 132 of at least one multi-fiber ferrule 130 (one shown) and secured to the fiber bores 132 with a suitable adhesive. For simplicity, the other components of the fiber optic connector 126 have been omitted from Fig. 12. At least one of the plurality of optical fibers inserted into the ferrule 130 is a hollow-core optical fiber 10. In one embodiment, each of the optical fibers 126 inserted into the multi-fiber ferrule 130 may be a hollow-core optical fiber 10. Similar to the above, for those optical fibers 126 that are hollow-core optical fibers 10 inserted into the multi-fiber ferrule 130, the end face 34 of the hollow-core optical fiber 10 may be slightly recessed within its respective fiber bore 132. For example, in one embodiment, the outer end face 40 of the flexible membrane 30 may be recessed relative to the ferrule end face 136 within the fiber bore 132 about 10 μm. The fiber optic connector 126 of the fiber optic cable assembly 120 may be optically coupled to another fiber optic cable assembly, through a corresponding fiber optic connector, or an optical device (now shown).

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The present disclosure in its broader aspects is therefore not limited to the specific details, representative apparatus and methods and illustrative examples shown and described. Accordingly, departures may be made from such details without departing from the scope of the present disclosure.

**Claims**

1. A hollow-core optical fiber for carrying an optical signal, comprising:

   a hollow core fiber body having at least a first terminated end that defines a first end face; and
   a first flexible membrane having an inner end face, an outer end face, and a thickness (t),
   wherein the inner end face of the first flexible membrane is coupled to the first end face of the hollow core fiber body to seal the hollow core fiber body at the first end face, and
   wherein the thickness (t) of the first flexible membrane is less than about 5 μm.

2. The optical fiber of claim 1, wherein the first flexible membrane has an optical thickness (T) that is an integer multiple of a quarter wavelength of the wavelength of the optical signal carried by the hollow-core optical fiber.

3. The optical fiber of claim 2, wherein the first flexible membrane has an optical thickness (T) according to the equation:

$$T = \lambda\left(\frac{1}{4} + m\right),$$

where λ is the wavelength of the optical signal carried by the hollow core optical fiber and m is an integer selected from 0 and positive integers.

4. The optical fiber of any of the preceding claims, wherein the first flexible membrane is gas permeable and liquid resistant.

5. The optical fiber of any of the preceding claims, wherein at least one of the inner end face and the outer end face of the first flexible membrane includes an antireflective coating.

6. The optical fiber of claim 5, wherein both the inner end face and the outer end face of the first flexible membrane include an antireflective coating.

7. The optical fiber of any of the preceding claims, wherein the outer end face of the first flexible membrane includes a hydrophobic coating.

8. The optical fiber of any of the preceding claims, wherein the inner end face of the first flexible membrane is treated to enhance adhesion.

9. The optical fiber of any of the preceding claims, wherein the first end face of the hollow-core fiber body at the first terminated end is non-perpendicular to a longitudinal axis of the hollow-core optical fiber.

10. The optical fiber of claim 9, wherein the first end face of the hollow-core fiber body at the first terminated end is angled between about 2 degrees and about 5 degrees away from being perpendicular to the longitudinal axis of the hollow-core optical fiber, and preferably angled about 3 degrees away from being perpendicular to the longitudinal axis of the hollow-core optical fiber.

11. The optical fiber of claim 9 or 10, wherein the inner end face and the outer end face of the first flexible membrane is non-perpendicular to a longitudinal axis of the first flexible membrane.

12. The optical fiber of claim 11, wherein the inner end face and the outer end face of the first flexible membrane are each angled between about 2 degrees and about 5 degrees away from being perpendicular to the longitudinal axis of the first flexible membrane, and preferably angled about 3 degrees away from being perpendicular to the longitudinal axis of the first flexible membrane.

13. The optical fiber of any of the preceding claims, wherein the hollow core fiber body includes a second terminated end to define a second end face, the optical fiber further comprising:

   a second flexible membrane coupled to the second end face of the hollow core fiber body to seal the hollow core fiber body at the second end face.

14. A fiber optic cable assembly, comprising:

   a fiber optic cable carrying a first plurality of optical fibers, wherein a set of the first plurality of optical fibers includes at least one hollow-core optical fiber according to any of claims 1-13; and
   at least one ferrule of a fiber optic connector having one or more fiber bores with respective one or more second optical fibers from the first plurality of optical fibers received therein, wherein at least one of the one or more second optical fibers is from the set of hollow-core optical fibers.

15. The fiber optic cable assembly of claim 14, wherein the at least one ferrule includes a ferrule end face, and wherein the outer end face of the first flexible membrane from the at least one of the one or more second optical fibers from the set of hollow-core optical fibers is recessed from the ferrule end face.

FIG. 1

**FIG. 2**

**FIG. 3**

FIG. 4

FIG. 5

FIG. 6

EP 4 685 531 A1

30b

52    50

54    56

40    38

## FIG. 7

$t_m$  $t_p$

$W_p$

58

74

$L_m$

76

10

72

$W_m$

$L_p$

## FIG. 9

90

START

CLEAVE OPTICAL FIBER TO MAKE AND END FACE — 92

MAKE PELLICLE FROM MATERIAL OF FLEXIBLE MEMBRANE — 94

ADD COATING (IF ANY) TO THE END FACES OF PELLICLE — 96

COUPLE THE PELLICLE TO A HONEY COMB MASKING SUBSTRATE — 98

APPLY BONDING AGENT TO THE END FACE OF OPTICAL FIBERS OR INNER END FACE OF PELLICLE — 100

INSERT OPTICAL FIBERS INTO THROUGH BORES IN MASKING SUBSTRATE — 102

CURE THE BONDING AGENT TO SECURE THE FLEXIBLE MEMBRANES TO THE END FACES OF THE OPTICAL FIBERS — 104

END

FIG. 8

FIG. 10

FIG. 11

FIG. 12

Europäisches Patentamt
European Patent Office
Office européen des brevets

## EUROPEAN SEARCH REPORT

**Application Number**

EP 25 19 0113

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 0 344 478 A2 (UNIV RAMOT [IL]) 6 December 1989 (1989-12-06) * column 2, lines 41-55; figure 1 * * column 5, lines 21-27 * | 1-15 | INV. G02B6/02 G02B6/032 G02B6/24 G02B6/25 G02B6/26 G02B6/38 |
| A | Anonymous: "Produkte / Polarization Optics / Liquid Crystal Devices / ITO-Coated PET Film", , 22 October 2020 (2020-10-22), XP093329897, Retrieved from the Internet: URL:https://www.thorlabs.de/newgrouppage9.cfm?objectgroup_id=9535 [retrieved on 2025-10-29] * the whole document * | 1-15 | |
| A | US 2023/350135 A1 (KAMITSUNA HIDEKI [JP] ET AL) 2 November 2023 (2023-11-02) * paragraph [0038]; figures 1-2 * | 1-15 | |

**TECHNICAL FIELDS SEARCHED (IPC)**

G02B

The present search report has been drawn up for all claims

| Place of search | Date of completion of the search | Examiner |
|---|---|---|
| Berlin | 29 October 2025 | Verdrager, Véronique |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 19 0113

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2025

| Patent document cited in search report | | Publication date | Patent family member(s) | | Publication date |
|---|---|---|---|---|---|
| EP 0344478 | A2 | 06-12-1989 | DE | 68911749 T2 | 28-04-1994 |
| | | | EP | 0344478 A2 | 06-12-1989 |
| | | | IL | 86296 A | 15-12-1991 |
| | | | US | 4930863 A | 05-06-1990 |
| US 2023350135 | A1 | 02-11-2023 | CN | 115943333 A | 07-04-2023 |
| | | | EP | 4206762 A1 | 05-07-2023 |
| | | | JP | WO2022044891 A1 | 03-03-2022 |
| | | | TW | 202212877 A | 01-04-2022 |
| | | | US | 2023350135 A1 | 02-11-2023 |
| | | | WO | 2022044891 A1 | 03-03-2022 |

EPO FORM P0459

For more details about this annex : see Official Journal of the European Patent Office, No. 12/82

**EP 4 685 531 A1**

**Patent documents cited in the description**

- US 63673897